# EUROPEAN PATENT SPECIFICATION

(11) **EP 2 508 375 B1**
(45) Date of publication and mention of the grant of the patent: **16.12.2015**
(21) Application number: 11161516.7
(22) Date of filing: 07.04.2011
(51) Int. Cl.: B60J 7/00, B60J 1/20

(54) **Rollo assembly and open roof construction provided therewith**
Rolloanordnung und offene Dachkonstruktion mit solch einer Anordnung
Ensemble d'enrouleur et toit ouvrant muni d'un tel ensemble

(43) Date of publication of application: 10.10.2012
(73) Proprietor: Inalfa Roof Systems Group B.V., 5804 AB Venray (NL)
(72) Inventor: Jansen, Carolus Theodorus Wilhelmus Petrus, 5821 AW, Vierlingsbeek (NL)
(74) Representative: De Vries & Metman

(56) References cited:
- DE-A1-102005 024 657
- DE-U1-202004 009 470
- FR-A1- 2 882 090
- US-A1- 2009 178 771

## Description

The invention firstly relates to a rollo assembly, comprising a flexible sun screen having two longitudinal side edges, a rotatable winding tube for winding on or off the flexible sun screen and two elongate guide members for cooperation with respective ones of the longitudinal side edges, wherein each longitudinal side edge is provided with a flexible elongate strip attached to the sun screen for, in a guiding manner, engaging a respective one of the guide members.

Such a rollo assembly is known from document DE 10 2005 024 657 A1.

When the sun screen is wound on or off the winding tube, the elongate strips slide along the guide members. Because it is desired to keep the sun screen taut a considerable transverse tension is maintained in the sun screen which leads to high frictional forces between the elongate strips and the guide members. These high frictional forces require considerable operating forces for moving the sun screen.

It is an object to provide an improved rollo assembly of the above type.

In accordance with the present invention the rollo assembly is characterized in that the guide members are provided with a succession of rotatable guide wheels for cooperation with said elongate strips.

When the sun screen is wound on or off the winding tube the elongate strips move over the guide wheels which, as a result, will rotate (roll). Because the roll resistance experienced by the guide wheels is much lower than the frictional forces experienced by the sliding strips according to the state of the art rollo, and as a result the operating forces will be considerably lower.

It is noted that the expression "guide wheels" is intended to encompass a wide variety of members which are capable of a rolling engagement with the elongate strips, such as for example wheels, rollers, barrels, drums or alike.

In a preferred embodiment of the rollo assembly according to the present invention each elongate strip has, with respect to the sun screen, an inner strip edge and an outer strip edge, whereas each elongate strip comprises an inner region including said inner strip edge which is not attached to the sun screen and an outer region including said outer strip edge, and wherein the guide wheels are positioned such as to engage the inner strip edge, whereas the outer region, directly or indirectly through the sun screen, is engaged by a counter part of the respective guide member positioned outwardly from the guide wheels.

Because the inner region is not attached to the sun screen the distance between said inner edge which is engaged by the guide wheels and the sun screen may be increased such that the sun screen may easily pass the guide wheel. The counter part engaging the outer region together with the guide wheels engaging the inner strip edge will act to keep the elongate strip in the optimal position for a minimal amount of friction.

In one embodiment the guide wheels each have an axis of rotation extending perpendicularly to the sun screen. In another embodiment, however, the guide wheels each may have an axis of rotation extending orthogonally with respect to the longitudinal axis of the sun screen and non-orthogonally with respect to a respective local transverse axis of the sun screen. Such an inclined axis of rotation may promote the cooperation between the guide wheels and said elongate strips.

It is possible then that each guide wheel has an upper side and a lower side and is positioned such that the sun screen passes over said upper or below said lower side and wherein the axis of rotation of the guide wheel extends such that the side over or below which the sun screen passes is inclined towards the longitudinal centre line of the sun screen. Specifically, such a position of the guide wheels makes it easy for the sun screen to pass the guide wheels without or with only a limited amount of contact (and thus friction) there between.

Irrespective the orientation of the guide wheels it is possible, in one embodiment, that the elongate strips are positioned in planes extending inclined with respect to the sun screen. This measure also may contribute to making it easier for the sun screen to pass the guide wheels without or with only a limited amount of contact (and thus friction) there between.

The counter part may come in different shapes. In one embodiment it is defined by a wall portion of the guide member. Such a wall portion may have a shape optimised for the respective situation and may be positioned at any appropriate position of the guide member. The expression "wall portion of the guide member" is intended to encompass any member which is integral with, or directly/indirectly connected to the guide member and is capable of (directly or indirectly) engaging the respective part of the outer region of the elongate strip. Such a wall portion therefore also may be defined by any insert located within the guide member.

In an alternative embodiment of the rollo assembly according to the present invention said counter part is defined by auxiliary guide wheels. Again it should be noted that the expression "guide wheels" is intended to encompass a wide variety of members which are capable of a rolling engagement with the elongate strips, such as for example wheels, rollers, barrels, drums or alike.

Such auxiliary guide wheels may engage the outer strip edge. However, the structure also may be such that an upper or lower side of the outer region of the elongate strip is engaged (directly or indirectly through the sun screen).

In yet another embodiment of the rollo assembly the guide wheels are mounted in the guide member for a movement towards the opposite guide member while being spring loaded in the opposite direction. As a result the guide wheels load the elongate strips and thus the sun screen for keeping later taut in a transverse direction while allowing an adjustment of the position of the guide wheels (which for example allows a compensation for production tolerances).

It is possible, for example, that at least the guide wheels are supported by a spring loaded movable insert positioned within the guide member. However, it is conceivable too that the counter part is supported by said insert.

In one embodiment of the rollo assembly according to the present invention the elongate strips not only are flexible in a longitudinal direction allowing these to be wound on the winding tube, but also in a transverse direction while providing a spring force in said direction, and the counter part (for example a wall portion of the guide member) extends (for example inclined) in a manner such as to promote a sliding motion of the elongate strip there along, directly or indirectly through the sun screen, when the elongate strip is flexed in said transverse direction. This embodiment also offers the possibility to keep the sun screen taut in a transverse direction (and to compensate for production tolerances).

In yet another embodiment of the rollo assembly the guide wheels are provided with a circumferential recess for receiving and engaging the corresponding elongate strip, with a cross sectional shape substantially complementary to the cross sectional shape of the corresponding part of the strip. Such a complementary shape at one hand offers the guide wheel the capability to maintain the elongate strip in a desired position, but at the other hand may lead to an increase of friction between the guide wheel and elongate strip.

Therefore, as an alternative it is possible that the guide wheels are provided with a circumferential recess for receiving and engaging the corresponding elongate strip, with a bottom for engaging the corresponding edge of the strip and with two side walls diverging outwardly. Generally the bottom will be the only part of the guide wheel engaging the elongate strip, thus reducing any friction as much as possible. The diverging side walls further offer the elongate strip the opportunity to pivot on top of the bottom without directly being engaged by said side walls, such that variations of the position of the elongate strips relative to the side wheels (if needed) are possible.

Apart from or in addition to the previously mentioned possibilities to give the rotation axes of the guide wheels an inclined position or to position the elongate strips in inclined planes, it is also conceivable that the guide members are provided with guide provisions for keeping the sun screen out of contact with the guide wheels. For example, such guide provisions may be defined by wall portions of the guide members. Again, the expression "wall portion of the guide members" is intended to encompass any member which is integral with, or directly/indirectly connected to the guide member and is capable of (directly or indirectly) engaging the respective part of the sun screen. Such a wall portion therefore also may be defined by any insert located within the guide member.

In a second aspect the invention relates to an open roof construction for a vehicle, comprising a roof opening defined in a stationary roof part of the vehicle and a rollo assembly according to the present invention cooperating with said roof opening.

Hereinafter the invention will be elucidated while referring to the drawing in which:
Figure 1 schematically shows part of a vehicle provided with an open roof construction,
Figure 2 on a larger scale shows a rollo assembly for use in the open roof construction of figure 1;
Figure 3 shows a detail of a state of the art rollo assembly according to the cross section A-A in figure 2, and
Figures 4-9 show corresponding details of different embodiments of the rollo assembly according to the present invention according to the cross section A-A in figure 2.

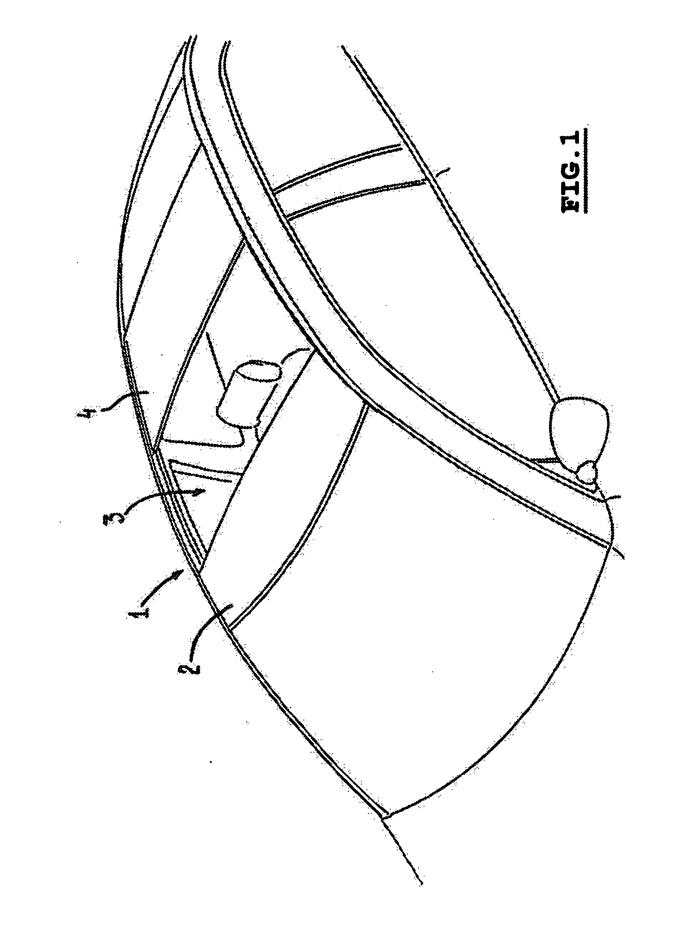

Referring firstly to figure 1 part of a vehicle 1 is illustrated which is provided with an open roof construction. As illustrated, a roof opening 3 defined in a stationary roof part 2 of the vehicle. A movable panel 4 is provided for opening and closing said roof opening.

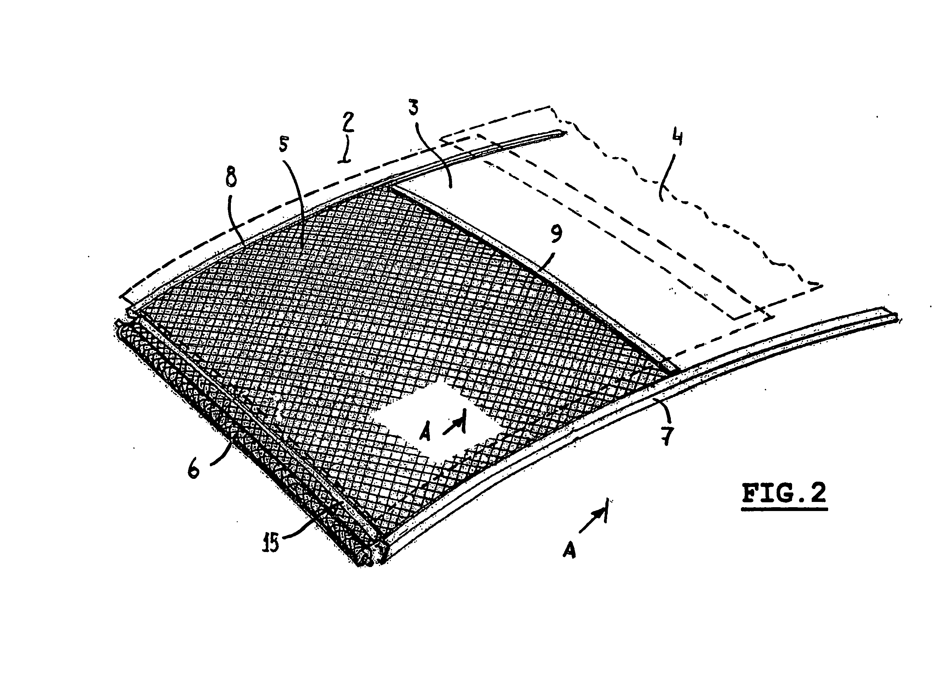

Figure 2 illustrates a rollo assembly cooperating with said roof opening 3. The rollo assembly basically comprises a flexible sun screen 5, a rotatable winding tube 6 for winding on or off the flexible sun screen 5 and two elongate guide members 7,8 for cooperation with respective ones of longitudinal side edges of the sun screen 5. A transversal edge of the sun screen 5 remote from the winding tube 6 is provided with an operating beam 9 extending between the guides 7 and 8 (which operating beam 9 in a manner known per se may be moved along said guides for moving the sun screen 5 while winding latter on or off the winding tube 6 which, in a manner known too, may be provided with tensioning means not illustrated, such as an internal torsion spring).

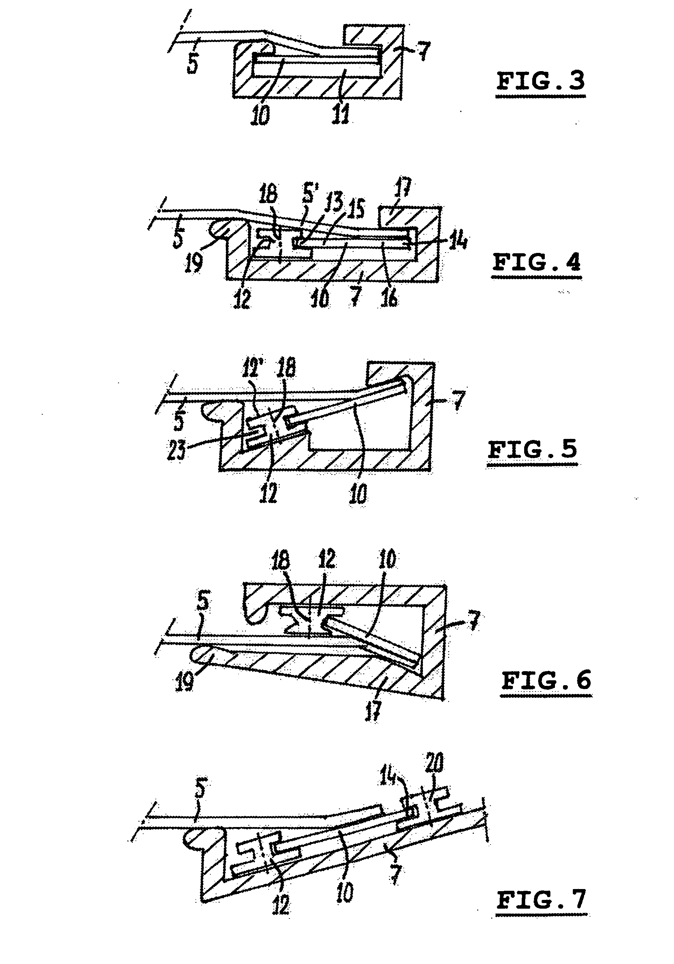

Below, figures 3-9 will be discussed which, all on a larger scale and in a cross section according to A-A in figure 2, show different embodiments. Specifically figure 3 relates to a state of the art embodiment, whereas figures 4-9 relate to embodiments according to the invention. These figures all show only one side of a sun screen cooperating with a guide member 7; the opposite side (cooperating with guide member 8) will be a mirror image thereof.

Referring to figure 3, one can see that a longitudinal side edge of a state of the art sun screen 5 is provided with a flexible elongate strip 10 attached to the sun screen for, in a guiding manner, engaging guide member 7. The guide strip 10 is housed in a cavity 11 defined within the guide member 7. During a longitudinal movement of the sun screen 5 the strip 10 will slide along the guide member 7 with resulting friction forces (among others caused by the lateral tension in the sun screen 5 which is required for keeping it taut).

Next referring to figure 4 a first embodiment according to the present invention is illustrated. The guide member 7 is provided with a succession of rotatable guide wheels 12 for cooperation with said elongate strip 10. These guide wheels 12 will be positioned next to each other along at least part of the length of the guide member 7 at a certain distance (which may be that small that the guide wheels 12 almost engage each other, but which also may be larger, among others depending on the rigidity of the strip 10 and the permissible deformation thereof in the transversal direction).

The elongate strip 10 has, with respect to the sun screen 5, an inner strip edge 13 and an outer strip edge 14, and each elongate strip comprises an inner region 15 including said inner strip edge 13 which is not attached to the sun screen 5 and an outer region 16 including said outer strip edge 14 attached to the sun screen (in any appropriate manner, e.g. stitching, gluing, fusing). The guide wheels 12 are positioned such as to engage the inner strip edge 13, whereas the outer region 16 (indirectly through the sun screen 5) is engaged by a counter part or wall portion 17 of the respective guide member 7 positioned outwardly from the guide wheels 12.

In this embodiment the guide wheels 12 each have an axis of rotation 18 extending perpendicularly to the sun screen 5. The strip 10 extends in parallel to the main part of the sun screen 5, A small part 5' of the sun screen extends inclined over the guide wheels 12 and for this reason the guide member 7 is provided with a guide provision or wall portion 19 for keeping said part 5' of the sun screen out of contact with the guide wheels.

The major part of the lateral tension in the sun screen 5 will be transmitted to the guide wheels 12 through the inner strip edge 13, resulting in a reduced friction when the sun screen moves in a longitudinal direction (winding on or off the winding tube 6). Only a minor part of said tension results in a force with which the outer region 16 (through the sun screen part positioned above it) engages the counter part 17 of the guide member 7.

In figure 5 an embodiment is illustrated in which the guide wheels 12 each have an axis of rotation 18 extending orthogonally with respect to the longitudinal axis of the sun screen 5 (that means located in the plane of the drawing) and non-orthogonally with respect to a respective local transverse axis of the sun screen 5 (thus inclined relative to a vertical line in the drawing). The strip 10 also extends inclined relative to the sun screen 5. The guide wheel 12 has an upper side 12' and is positioned such that the sun screen 5 passes over said upper side, and the axis of rotation 18 of the guide wheel extends such that said upper side 12' is inclined towards the opposite guide member 8 or to the longitudinal centre line of the sun screen 5 (to the left in the drawing).

Figure 6 illustrates an embodiment in which the axis of rotation 18 extends perpendicularly to the sun screen 5 but in which the strip 10 is inclined. The sun screen passes below the guide wheel 12. In such a configuration in which the guide wheel 12 is positioned above the sun screen 5, the axis of rotation 18 also may extend inclined.

In the embodiment according to figure 7 the counter part of the guide member 7 has been replaced (or is defined) by auxiliary guide wheels 20 which engage the outer strip edge 14. The number of auxiliary guide wheels 20 and the distance there between may vary.

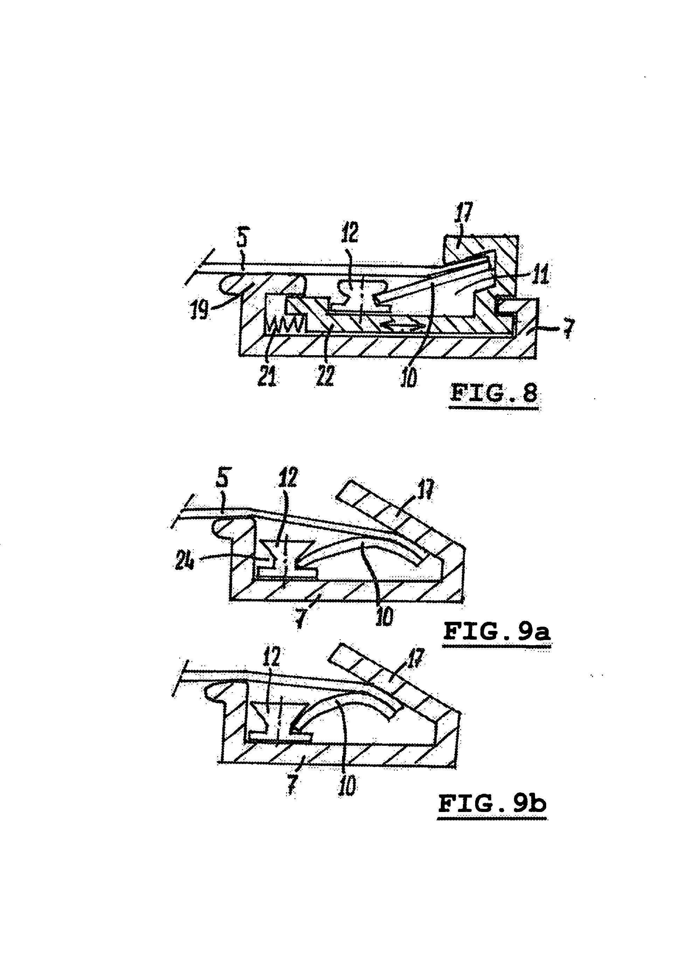

Figure 8 shows an embodiment in which the guide wheels 12 are mounted in the guide member 7 for a movement towards and away from the opposite guide member (guide member 8 not illustrated but positioned to the left in this figure) while being spring loaded (to the right in this figure) by a spring member 21. Specifically the guide wheels 12 are supported by a spring loaded movable insert 22 positioned within the cavity 11. of the guide member 7.

In the illustrated embodiment the counter part 17 (which also may comprise auxiliary guide wheels as illustrated in figure 7) too is supported by said insert 22 and will move along therewith, keeping the distance to the guide wheel 12 constant,

Figure 9 shows two different positions of a further embodiment in which, the elongate strips 10 not only are flexible in a longitudinal direction allowing these to be wound on the winding tube 6 (figure 2), but also in a transverse direction while providing a spring force in said direction. The counter part 1.7 comprises a wall portion of the guide member 7 extending inclined in a manner such as to promote a sliding motion of the respective part of the elongate strip 10 there along (directly or indirectly through the sun screen) when the elongate strip 10 is flexed in said transverse direction (from the situation in figure 9a to the situation in figure 9b or back) under influence of an increase (or decrease) of the transverse tension in the sun screen 5.

Finally it is noted that the guide wheels 12 may be provided with a circumferential recess for receiving and engaging the corresponding edge 13 or 14 of the elongate strip 10, with a cross sectional shape substantially complementary to the cross sectional shape of the corresponding edge of the strip 10 (illustrated, for example, as recess 23 in figure 5) or, alternatively, with a cross sectional shape defining a bottom for engaging the corresponding edge of the strip 10 and with two side walls diverging outwardly therefrom (illustrated, for example, as recess 24 in figure 9a), for example for allowing the strip 10 to extend inclined while the axis of rotation 18 of the guide wheel 12 does not extend inclined (figure 6) or for allowing the strip 10 to move to a different shape and position (figure 9).

The invention is not limited to the embodiments described before which may be varied widely within the scope of the invention as defined by the appending claims.

## Claims

1. Rollo assembly, comprising a flexible sun screen (5) having two longitudinal side edges, a rotatable winding tube (6) for winding on or off the flexible sun screen and two elongate guide members (7, 8) cooperating with respective ones of the longitudinal side edges, wherein each longitudinal side edge is provided with a flexible elongate strip (10) attached to the sun screen for, in a guiding manner, engaging a respective one of the guide members (7, 8), **characterized in that** the guide members (7, 8) are provided with a succession of rotatable guide wheels (12) cooperating with said elongate strips (10).

2. Rollo assembly according to claim 1, wherein each elongate strip (10) has, with respect to the sun screen, an inner strip edge (13) and an outer strip edge (14), whereas each elongate strip comprises an inner region including said inner strip edge (13) which is not attached to the sun screen and an outer region including said outer strip edge (14), and wherein the guide wheels (12) are positioned such as to engage the inner strip edge (13), whereas the outer region, directly or indirectly through the sun screen, is engaged by a counter part of the respective guide member positioned outwardly from the guide wheels (12).

3. Rollo assembly according to claim 2, wherein the guide wheels each have an axis (18), of rotation extending perpendicularly to the sun screen.

4. Rollo assembly according to claim 2, wherein the guide wheels (12) each have an axis (18) of rotation extending orthogonally with respect to the longitudinal axis of the sun screen and non-orthogonally with respect to a respective local transverse axis of the sun screen.

5. Rollo assembly according to claim 4, wherein each guide wheel has an upper side and a lower side and is positioned such that the sun screen passes over said upper or below said lower side and wherein the axis of rotation of the guide wheel extends such that the side over or below which the sun screen passes is inclined towards the longitudinal axis of the sun screen.

6. Rollo assembly according to any of the previous claims, wherein the elongate strips are positioned in planes extending inclined with respect to the sun screen.

7. Rollo assembly according to any of the claims 2-6, wherein the counter part is defined by auxiliary guide wheels (20).

8. Rollo assembly according to any of the previous claims, wherein the guide wheels (12) are mounted in the guide member for a movement towards the opposite guide member while being spring loaded (21) in the opposite direction.

9. Rollo assembly according to claim 8, wherein at least the guide wheels (12) are supported by a spring loaded movable insert (22) positioned within the guide member (7, 8).

10. Rollo assembly according to claim 9 in combination with claim 2, wherein the counter part too is supported by said insert.

11. Rollo assembly according to any of the previous claims, wherein the elongate strips not only are flexible in a longitudinal direction allowing these to be wound on the winding tube, but also in a transverse direction while providing a spring force in said direction, and wherein the counter part extends in a manner such as to promote a sliding motion of the elongate strip there along, directly or indirectly through the sun screen, when the elongate strip is flexed in said transverse direction.

12. Rollo assembly according to any of the previous claims, wherein the guide wheels are provided with a circumferential recess (24) for receiving and engaging the corresponding elongate strip (10) with a cross sectional shape substantially complementary to the cross sectional shape of the corresponding part of the strip.

13. Rollo assembly according to any of the claims 1-11, wherein the guide wheels are provided with a circumferential recess for receiving and engaging the corresponding elongate strip, with a bottom for engaging the corresponding edge of the strip and with two side walls diverging outwardly.

14. Rollo assembly according to any of the previous claims, wherein the guide members are provided with guide provisions for keeping the sun screen out of contact with the guide wheels.

15. Open roof construction for a vehicle, comprising a roof opening defined in a stationary roof part of the vehicle and a rollo assembly according to any of the previous claims cooperating with said roof opening.

## Patentansprüche

1. Rollobaugruppe, welche einen flexiblen Sonnenschirm (5), der zwei Längsseitenränder hat, ein drehbares Aufwickelrohr (6) zum Auf- und Abwickeln des flexiblen Sonnenschirms und zwei langgestreckte Führungselemente (7, 8) aufweist, welche mit zugehörigen der Längsseitenränder kooperieren, wobei jeder Längsseitenrand mit einem flexiblen, langgestreckten Streifen (10) bereitgestellt ist, welcher am Sonnenschirm angebracht ist zum, in führender Weise, in Eingriff Stehen mit einem zugehörigen der Führungselemente (7, 8), **dadurch gekennzeichnet, dass** die Führungselemente (7, 8) mit einer Abfolge von drehbaren Führungsrädern (12) bereitgestellt sind, die mit den besagten langgestreckten Streifen (10) kooperieren.

2. Rollobaugruppe gemäß Anspruch 1, wobei jeder langgestreckte Streifen (10) mit Bezug auf den Sonnenschirm einen inneren Streifenrand (13) und einen äußeren Streifenrand (14) hat, wobei jeder langgestreckte Streifen einen Innenbereich, der den besagten inneren Streifenrand (13) aufweist, der nicht am Sonnenschirm befestigt ist, und einen Außenbereich aufweist, der den besagten äußeren Streifenrand (14) aufweist, und wobei die Führungsräder (12) positioniert sind, um mit dem inneren Streifenrand (13) im Eingriff zu sein, wohingegen der Außenbereich durch den Sonnenschirm direkt oder indirekt mit einem Gegenstück des zugehörigen Führungselements im Eingriff ist, welches außerhalb der Führungsräder (12) bereitgestellt ist.

3. Rollobaugruppe gemäß Anspruch 2, wobei jedes der Führungsräder eine Drehachse (18) hat, welche sich rechtwinklig zum Sonnenschirm erstreckt.

4. Rollobaugruppe gemäß Anspruch 2, wobei jedes der Führungsräder (12) eine Drehachse (18) hat, welche sich rechtwinklig mit Bezug auf die Längsachse des Sonnenschirms erstreckt und sich mit Bezug auf eine zugehörige lokale Querachse des Sonnenschirms nicht rechtwinklig erstreckt.

5. Rollobaugruppe gemäß Anspruch 4, wobei jedes Führungsrad eine obere Seite und eine untere Seite hat und positioniert ist, sodass der Sonnenschirm über der besagten oberen oder unter der besagten unteren Seite vorbeitritt, und wobei sich die Drehachse des Führungsrads erstreckt, sodass die Seite, über der oder unter der der Sonnenschirm vorbeitritt, in Richtung zur Längsachse des Sonnenschirms hin geneigt ist.

6. Rollobaugruppe gemäß irgendeinem der vorhergehenden Ansprüche, wobei die langgestreckten Streifen in Ebenen positioniert sind, welche sich bezogen auf den Sonnenschirm geneigt erstrecken.

7. Rollobaugruppe gemäß irgendeinem der Ansprüche 2-6, wobei das Gegenstück durch Hilfsführungsräder (20) definiert ist.

8. Rollobaugruppe gemäß irgendeinem der vorhergehenden Ansprüche, wobei die Führungsräder (12) im Führungselement für eine Bewegung in Richtung hin zum entgegengesetzten Führungselement angebracht sind, während sie in der entgegengesetzten Richtung federbelastet sind (21).

9. Rollobaugruppe gemäß Anspruch 8, wobei zumindest die Führungsräder (12) durch einen federbelasteten, bewegbaren Einsatz (22) abgestützt sind, welcher innerhalb des Führungselements (7,8) positioniert ist.

10. Rollobaugruppe gemäß Anspruch 9, in Kombination mit Anspruch 2, wobei das Gegenstück ebenfalls durch den besagten Einsatz abgestützt ist.

11. Rollobaugruppe gemäß irgendeinem der vorhergehenden Ansprüche, wobei die langgestreckten Streifen nicht nur in einer Längsrichtung flexibel sind, was es diesen erlaubt, auf das drehbare Aufwickelrohr aufgewickelt zu werden, sondern auch in einer Querrichtung, während sie in der besagten Richtung eine Federkraft bereitstellen, und wobei sich das Gegenstück in einer Art erstreckt, um eine Verschiebebewegung des langgestreckten Streifens direkt oder indirekt durch den Sonnenschirm dort entlang zu fördern, wenn der langgestreckte Streifen in der besagten Querrichtung gebeugt wird.

12. Rollobaugruppe gemäß irgendeinem der vorhergehenden Ansprüche, wobei die Führungsräder mit einer Umfangsaussparung (24) mit einer Querschnittgestalt bereitgestellt sind, welche im Wesentlichen komplementär zur Querschnittgestalt des korrespondierenden Teils des Streifens ist, zum Empfangen des und in Eingriff Stehen mit dem korrespondierenden langgestreckten Streifen (10).

13. Rollobaugruppe gemäß irgendeinem der Ansprüche 1-11, wobei die Führungsräder mit einer Umfangsaussparung mit einem Boden zum in Eingriff Stehen mit dem korrespondierenden Rand des Streifens und mit zwei Seitenwänden bereitgestellt sind, welche nach außen hin divergieren, zum Empfangen des und in Eingriff Stehen mit dem korrespondierenden langgestreckten Streifen.

14. Rollobaugruppe gemäß irgendeinem der vorhergehenden Ansprüche, wobei die Führungselemente mit Führungsmitteln zum Halten des Sonnenschirms außer Kontakt von den Führungsrädern bereitgestellt sind.

15. Offen-Dach-Konstruktion für ein Fahrzeug, welches eine Dachöffnung, die in einem stationären Dachteil des Fahrzeugs definiert ist, und eine Rollobaugruppe gemäß irgendeinem der vorhergehenden Ansprüche aufweist, welche mit der besagten Dachöffnung kooperiert.

## Revendications

1. Ensemble d'enrouleur, comprenant un pare-soleil flexible (5) ayant deux bords latéraux longitudinaux, un tube d'enroulement rotatif (6) destiné à enrouler ou dérouler le pare-soleil flexible et deux éléments de guidage allongés (7, 8) coopérant avec des bords respectifs des bords latéraux longitudinaux, dans lequel chaque bord latéral longitudinal est muni d'une bande allongée flexible (10) fixée au pare-soleil destinée à s'engager, avec effet de guidage, avec un élément respectif des éléments de guidage (7, 8), **caractérisé en ce que** les éléments de guidage (7, 8) sont munis d'une succession de roues de guidage rotatives (12) coopérant avec lesdites bandes allongées (10).

2. Ensemble d'enrouleur selon la revendication 1, dans lequel chaque bande allongée (10) a, par rapport au pare-soleil, un bord intérieur de bande (13) et un bord extérieur de bande (14) tandis que chaque bande allongée comprend une zone intérieure comportant ledit bord intérieur de bande (13) qui n'est pas fixée au pare-soleil et une zone extérieure comportant ledit bord extérieur de bande (14), et dans lequel les roues de guidage (12) sont positionnées de manière à s'engager avec le bord intérieur de bande (13) tandis que la zone extérieure est engagée, directement ou indirectement à travers le pare-soleil, par une contrepartie de l'élément de guidage respectif positionnée à l'extérieur des roues de guidage (12).

3. Ensemble d'enrouleur selon la revendication 2, dans lequel les roues de guidage ont chacune un axe (18) de rotation s'étendant perpendiculairement au pare-soleil.

4. Ensemble d'enrouleur selon la revendication 2, dans lequel les roues de guidage (12) ont chacune un axe (18) de rotation s'étendant orthogonalement par rapport à l'axe longitudinal du pare-soleil et non-orthogonalement par rapport à un axe transversal local respectif du pare-soleil.

5. Ensemble d'enrouleur selon la revendication 4, dans lequel chaque roue de guidage a un côté supérieur et un côté inférieur et est positionnée de sorte que le pare-soleil passe par-dessus ledit côté supérieur ou en dessous dudit côté inférieur et dans lequel l'axe de rotation de la roue de guidage s'étend de sorte que le côté au-dessus ou en dessous duquel passe le pare-soleil soit incliné vers l'axe longitudinal du pare-soleil.

6. Ensemble d'enrouleur selon l'une des revendications précédentes, dans lequel les bandes allongées sont positionnées dans des plans s'étendant de manière inclinée par rapport au pare-soleil.

7. Ensemble d'enrouleur selon l'une des revendications 2 à 6, dans lequel la contrepartie est définie par des roues de guidage auxiliaires (20).

8. Ensemble d'enrouleur selon l'une des revendications précédentes, dans lequel les roues de guidage (12) sont montées dans l'élément de guidage pour se déplacer vers l'élément de guidage opposé tout en étant actionnées par ressort (21) dans la direction opposée.

9. Ensemble d'enrouleur selon la revendication 8, dans lequel au moins les roues de guidage (12) sont supportées par un insert mobile actionné par ressort (22) positionné dans l'élément de guidage (7, 8).

10. Ensemble d'enrouleur selon la revendication 9 en combinaison avec la revendication 2, dans lequel la contrepartie est également supportée par ledit insert.

11. Ensemble d'enrouleur selon l'une des revendications précédentes, dans lequel les bandes allongées ne sont pas flexibles seulement dans une direction longitudinale permettant à celles-ci d'être enroulées sur le tube d'enroulement, mais aussi dans une direction transversale tout en fournissant une force de ressort dans ladite direction, et dans lequel la contrepartie s'étend de manière à promouvoir un mouvement de glissement de la bande allongée le long de celle-ci, directement ou indirectement à travers le pare-soleil, lorsque la bande allongée est fléchie dans ladite direction transversale.

12. Ensemble d'enrouleur selon l'une des revendications précédentes, dans lequel les roues de guidage sont munies d'un évidement circonférentiel (24) destiné à recevoir et à s'engager avec la bande allongée correspondante (10) avec une forme en coupe transversale substantiellement complémentaire à la forme en coupe transversale de la partie correspondante de la bande.

13. Ensemble d'enrouleur selon l'une des revendications 1 à 11, dans lequel les roues de guidage sont munies d'un évidement circonférentiel destiné à recevoir et à s'engager avec la bande allongée correspondante, avec une partie de fond pour s'engager avec le bord correspondant de la bande et avec deux parois latérales divergeant vers l'extérieur.

14. Ensemble d'enrouleur selon l'une des revendications précédentes, dans lequel les éléments de guidage sont munis de dispositions de guidage pour maintenir le pare-soleil hors de contact avec les roues de guidage.

15. Structure de toit ouvrant pour un véhicule, comprenant une ouverture de toit définie dans une partie de toit fixe du véhicule et un ensemble d'enrouleur selon l'une des revendications précédentes coopérant avec ladite ouverture de toit.
